(19) Europäisches Patentamt
European Patent Office
Office européen des brevets

(11) **EP 3 601 761 B1**

(12) **FASCICULE DE BREVET EUROPEEN**

(45) Date de publication et mention
de la délivrance du brevet:
**21.07.2021 Bulletin 2021/29**

(51) Int Cl.:
***F02B 1/02*** *(2006.01)*     ***F02B 25/00*** *(2006.01)*
***F02B 75/02*** *(2006.01)*     ***F02B 43/10*** *(2006.01)*

(21) Numéro de dépôt: **18720316.1**

(22) Date de dépôt: **22.03.2018**

(86) Numéro de dépôt international:
**PCT/FR2018/050693**

(87) Numéro de publication internationale:
**WO 2018/172703 (27.09.2018 Gazette 2018/39)**

(54) **MOTEUR DEUX TEMPS A EXPLOSION**

ZWEITAKTBRENNKRAFTMASCHINE

TWO-STROKE INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2017 FR 1752425**

(43) Date de publication de la demande:
**05.02.2020 Bulletin 2020/06**

(73) Titulaire: **SAS THOM THERMIC HYDROGEN OXYGEN MOBILITY**
**30100 Alès (FR)**

(72) Inventeur: **LOPEZ, Didier**
**30100 Ales (FR)**

(74) Mandataire: **Rhein, Alain**
**Cabinet BREV&SUD**
**55 Avenue Clément Ader**
**34170 Castelnau le Lez (FR)**

(56) Documents cités:
**GB-A- 2 249 585    JP-A- H0 893 571**
**US-A- 1 750 201    US-A- 2 522 649**
**US-A- 4 202 297**

**EP 3 601 761 B1**

## Description

La présente invention concerne les domaines des transports et des énergies renouvelables. Plus particulièrement, l'invention concerne un système de traction utilisant des énergies renouvelables pour tracter un véhicule et de préférence un véhicule aquatique.

Il est à noter que l'expression « véhicule aquatique » correspond dans ce document à un véhicule se déplaçant sur une voie navigable qu'elle soit fluviale ou maritime.

Initialement, le transport aquatique de biens et de personnes sur toutes les voies navigables mais aussi les déplacements pour des activités professionnelles (pêche, surveillance, activités scientifiques, police et militaire, tourisme etc.) ainsi que la plaisance, présentaient de nombreux atouts. En effet, la navigation à la voile utilise directement sur le lieu d'utilisation, une énergie éolienne gratuite et totalement renouvelable. De plus, la navigation à la voile présente également l'avantage de ne produire aucun rejet et aucune pollution pour produire cette énergie ou bien l'exploiter.

Le contexte économique du XXème siècle et notamment la nécessité de transporter de plus en plus vite des quantités de marchandises et/ou de personnes de plus en plus importantes a conduit au remplacement de l'usage de l'énergie éolienne par l'usage d'énergies fossiles comme source d'énergie de déplacement. Face à cette évolution les inconvénients de l'énergie éolienne qui n'est pas stockée et dont la disponibilité est intermittente voire inexistante sur certaines voies fluviales, sont devenus rédhibitoires. Le constat suivant est donc établi la navigation à la voile n'est plus en adéquation avec nos besoins actuels et à venir.

De nos jours, la navigation à la voile ne reste utilisée plus utilisée que pour la plaisance et la compétition, les transports notamment maritimes et fluviaux, utilisant, sauf à de rares exceptions, des énergies fossiles comme source d'énergie pour se déplacer.

Or, l'entrée dans le XXIème siècle a mis an lumière un épuisement des ressources d'énergie fossile qui étaient jusque là abondantes et parfois même considérées comme illimitées. Cette diminution de la disponibilité des énergies fossiles se répercute par une augmentation constante de leur cours sur les marchés internationaux. De ce fait, la consommation d'énergies fossiles impacte de plus en plus lourdement le coût des transports.

Par exemple, le lecteur pourrait considérer US1750201 ou GB2249585 lors de l'évaluation de l'invention suivante.

De plus, la consommation d'énergies fossiles impacte également l'environnement et la santé publique.

D'une part, il est admis que la combustion des énergies fossiles entraine une pollution directe générée par les rejets de combustion ($CO_2$, particules, gaz etc.). Ces rejets de combustion participent à la dégradation de conditions environnementales telles que la réduction de la couche d'ozone due notamment à l'amplification du phénomène d'effet de serre, la qualité de l'air, la qualité des eaux fluviales ou maritimes. Cette dégradation environnementale se répercute à son tour sur la faune et la flore. Par ricochet, la santé publique se trouve impactée par ces dégradations environnementales qui sont, notamment sources de troubles respiratoires, cutanés et de métabolisme. D'autre part, l'utilisation d'énergies fossiles implique également une pollution générée en amont lors de leur extraction, de leur traitement et de leur transport et en aval lors de la dépollution des équipements.

Enfin, même si c'est un phénomène ponctuel, la pollution accidentelle impacte lourdement l'environnement, la faune et la flore sur une zone déterminée à proximité du lieu de l'accident. Au regard des inconvénients de l'utilisation des énergies fossiles comme source de déplacement, des projets de motorisation électriques alimentées par de l'énergie solaire ont été développés. Ces projets permettent d'envisager à long terme des solutions viables.

Toutefois, à l'heure actuelle l'énergie solaire présente le désagrément d'être intermittente et le stockage de l'énergie solaire sous forme d'électricité générée par des panneaux photovoltaïques dans des batteries présente un certain nombre de problèmes, et ne constitue pas une solution satisfaisante. Si pendant l'exploitation, la production d'électricité par des panneaux photovoltaïques n'est pas polluante, le stockage de l'électricité dans des batteries n'est pas si avantageux.

Tout d'abord, la fabrication d'une batterie est polluante et requière des ressources limitées par exemple le lithium, le cobalt ou encore le manganèse. De plus, une batterie présente une conception complexe, elle peut comprendre un électrolyte spécifique formé par des sels complexes, des électrodes formées par des oxydes de métaux ou du graphite... qui sont autant d'éléments à isoler afin d'envisager leur recyclage. De ces constations résultent que l'élimination/recyclage d'une batterie n'est pas un acte anodin, mais complexe, énergivore et polluant.

Une autre solution alternative a été envisagée avec une utilisation de l'électrolyse et notamment l'alimentation d'une motorisation électrique par une pile à combustible. Toutefois, actuellement la pile à combustible comporte une chaîne énergétique de rendement trop faible pour être exploitable.

De nombreux pays comme la France disposent de voies navigables étendues ou d'accès maritimes multiples qui constituent des voies de transport qui ne sont plus suffisamment utilisées. Dans ce contexte, la présente invention a pour objectif de tirer profit de ces voies de transport. A ces fins, la présente invention propose une solution permettant de générer le déplacement d'un véhicule à partir d'énergies renouvelables quelques soient les conditions atmosphériques.

Dans cet objectif, la demanderesse a développé un système de traction d'un véhicule, le système de traction comprenant des moyens de production électrique qui alimentent des générateurs de gaz de combustion. Avantageusement, les gaz de combustion sont stockés dans une unité de stockage pressurisée qui alimente un moteur thermique, alors que les moyens de production électrique comportent des panneaux photovoltaïques, un générateur éolien et/ou une génératrice hydrolienne.

Plus particulièrement, dans le but d'optimiser le rendement du système de traction, la demanderesse a développé un moteur deux temps à explosion adapté à être alimenté par un mélange gazeux explosif.

Dans ce contexte, l'invention concerne un système moteur pour le combustible dihydrogène, le système moteur comprenant un moteur deux temps à explosion qui comprend un carter moteur comportant un carter haut et un carter bas qui contient de l'huile assurant la lubrification d'un piston depuis une position de point mort bas vers une position de compression, le moteur deux temps comporte des moyens d'étanchéité qui confinent, à tout moment et en toutes circonstances, l'huile dans le carter bas.

Le moteur deux temps à explosion se caractérise en ce que le carter haut comporte, d'une part, une lumière d'admission permettant d'introduire un carburant gazeux à base dihydrogène et dioxygène, et d'autre part, une lumière d'échappement qui, de par le maintien de l'huile dans le carter bas, ne rejette que de la vapeur d'eau chargée en carburant gazeux non consommé, le système moteur comprenant un dispositif de recyclage connecté à la lumière d'échappement, le dispositif de recyclage des gaz d'échappement permettant de récupérer le carburant gazeux non consommé et de le réinjecter au niveau de lumière d'admission. Avantageusement, le système moteur selon l'invention permet de récupérer l'intégralité du carburant gazeux non consommé. De ce fait, le rendement du moteur deux temps à explosion est optimisé tout en supprimant tout rejet polluant issu de la combustion du carburant et/ou de l'huile de lubrification du moteur.

Selon une première caractéristique de l'invention, le dispositif de recyclage comporte un échangeur thermique séparant la vapeur d'eau du mélange gazeux non consommé par condensation.

Selon une deuxième caractéristique de l'invention, les moyens d'étanchéité comportent un organe d'étanchéité ménagé en partie supérieure du piston. L'organe d'étanchéité permet de maintenir l'huile dans le carter bas depuis la position de point mort bas du piston jusqu'à la lumière d'admission et/ou la lumière d'échappement.

Selon une troisième caractéristique de l'invention, les moyens d'étanchéité comportent deux éléments d'étanchéité permettant d'obstruer respectivement la lumière d'échappement et la lumière d'admission. Avantageusement, les éléments d'étanchéité assurent le maintien de l'huile dans le carter bas lorsque le piston atteint ou dépasse la lumières d'admission et/ la lumière d'échappement. Plus particulièrement, les éléments d'étanchéité sont montés latéralement sur le piston et s'étendent longitudinalement de part et d'autre du piston.

Selon une quatrième caractéristique de l'invention, le moteur deux temps à explosion comporte un mélangeur disposé en amont de la lumière d'admission, le mélangeur permet de mêler le dihydrogène et le dioxygène tous deux pressurisés afin de créer le carburant gazeux adapté à exploser par thermo catalyse.

De manière avantageuse, le mélangeur comprend également une arrivée d'air comprimé afin de mêler le dioxygène et le dihydrogène à l'air comprimé, et de varier la concentration en dioxygène et dihydrogène dans le carburant gazeux. La variation de la concentration en dihydrogène et dioxygène dans le carburant gazeux permet de moduler le régime moteur.

De préférence, le mélangeur est connecté à la lumière d'admission via un conduit d'admission. En outre, il est à noter que le carburant gazeux non consommé en sortie du dispositif de recyclage est réinjecté via un conduit de récupération au niveau du mélangeur.

Selon une cinquième caractéristique de l'invention, au sein du carter haut, la lumière d'échappement est positionnée de manière supérieure à la lumière d'admission.

Selon un autre mode de réalisation de l'invention, les moyens d'étanchéité comportent, dans le carter bas, un système d'expansion contribuant à maintenir l'huile dans le carter bas à tout moment et en toutes circonstances.

Avantageusement, l'organe d'étanchéité et le système d'expansion coopèrent de manière à isoler hermétiquement le carter haut du carter bas à tout moment et en toutes circonstances, évitant que de l'huile ne passe depuis le carter bas vers la chambre à explosion. Ceci permet de remédier à un des principaux inconvénients d'un moteur deux temps classique qui brûle de l'huile dans la chambre à explosion rejetant ainsi des résidus de combustion d'huile qui sont extrêmement polluants.

D'autres particularités et avantages apparaitront dans la description détaillée, qui suit, de deux exemples de réalisation, non limitatifs, de l'invention illustrés par les figures 1 à 11 placées en annexe et dans lesquelles :

- la figure 1 correspond à une représentation d'un véhicule aquatique équipé d'un système de traction conforme à l'invention ;
- la figure 2 correspond à un schéma illustrant un système de traction conforme à un premier exemple de réalisation de l'invention ;
- les figures 3 à 10 correspondent à une représentation d'une cinématique d'un moteur deux temps à gaz utilisé dans le système de traction conforme à un deuxième exemple de réalisation de l'invention ; et
- la figure 11 correspond à une représentation schématique d'un dispositif de transformation d'une énergie cinétique d'un fluide en énergie mécanique, ce dispositif de transformation équipant le véhicule de la figure 1.

La présente invention concerne un système de traction 1 d'un véhicule 2 de préférence un véhicule 2 aquatique adapté à naviguer sur des voies fluviales et/ou maritimes. Avantageusement, le système de traction 1 selon l'invention permet d'alimenter des moyens de propulsion d'un véhicule 2, quelques soient les conditions atmosphériques, à partir d'énergies renouvelables, telles que l'énergie solaire, l'énergie éolienne et également l'énergie hydraulique pour un véhicule aquatique.

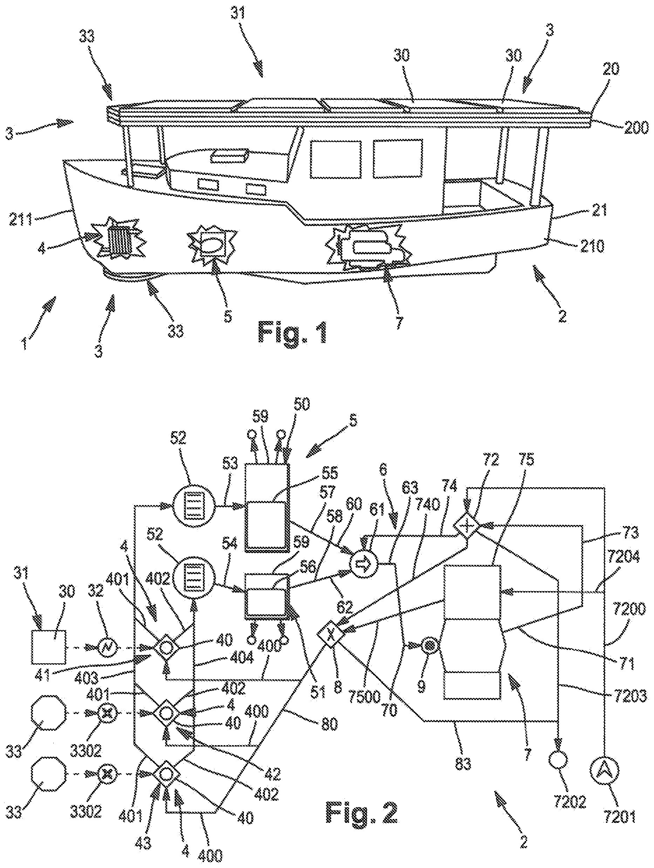

Dans cette optique le système de traction 1 illustré aux figures 1 et 2, comprend des moyens de production électrique 3 à partir d'énergies renouvelables.

A ces fins, les moyens de production électrique 3 sont adaptés à capter l'énergie solaire par l'intermédiaire d'un panneau photovoltaïque 30, et de préférence d'un ensemble 31 de panneaux photovoltaiques 30. Dans le cas particulier d'un véhicule 2 aquatique, les panneaux photovoltaïques 30 utilisés comportent un revêtement extérieur compatible avec une utilisation marine, c'est-à-dire, un revêtement extérieur résistant notamment à des conditions de corrosion salines élevées. Les moyens de production électrique 3 comprennent un convertisseur 32 en sortie des panneaux photovoltaïque 30 permettant de produire de l'électricité à une tension déterminée.

Dans l'exemple illustré à la figure 1, afin de conférer une exposition maximale aux rayons du soleil, les panneaux photovoltaïques 30 sont disposés en hauteur au niveau d'un auvent 20 du véhicule 2.

Il est à noter que les panneaux photovoltaïques 30 peuvent être équipés en sus d'un système d'optimisation de l'ensoleillement permettant de faire varier l'orientation des capteurs photovoltaique. Le système d'optimisation de l'ensoleillement peut par exemple être constitué par des vérins adaptés à faire varier l'inclinaison des panneaux photovoltaïques 30.

De plus, afin d'optimiser la production d'électricité, les moyens de production électrique 3 comportent un dispositif éolien et un dispositif hydraulique respectivement adaptés à produire de l'électricité en captant des flux hydrauliques ou aériens circulant aux alentours immédiats du véhicule 2 aquatique. Chaque dispositif éolien et hydraulique produit de l'électricité via un alternateur et est connecté à un convertisseur 32 de manière à fournir de l'électricité à une tension déterminée.

Cependant, le fait d'intégrer tant un dispositif éolien qu'un dispositif hydraulique à un véhicule 2 présente des contraintes auxquelles l'état de la technique en matière de dispositifs éolien et hydraulique ne propose pas de solution.

En effet, il existe au moins deux types de dispositif éolien, d'une part, une éolienne dite à « axe horizontale » qui est la plus courante et présente des pales perpendiculaires à l'axe de rotation et au flux d'air, et d'autre part, une éolienne dite à « axe verticale ».

Dans les deux cas, ces éoliennes comportent un rotor qui doit être placé le plus haut possible pour être exposé à des flux d'air réguliers et non impactés par les turbulences régnant tant au sol qu'à la surface de l'eau. De plus, le rotor des éoliennes à axe horizontal doit être disposé d'autant plus haut qu'il comporte des pales verticales qui doivent être de grandes dimensions pour entrainer en rotation le rotor et l'alternateur. Or, de telles caractéristiques sont incompatibles avec les contraintes d'un véhicule 2 destiné à se déplacer tout en captant des flux d'air d'orientation multiple de manière à générer de l'électricité.

De la même manière, il existe plusieurs types de dispositif hydraulique encore appelé « hydrolienne » qui permettent de capter un flux d'eau et de générer de l'électricité à l'aide d'un alternateur. En général, il s'agit d'une turbine de grandes dimensions qui est entrainée en rotation par un flux hydraulique par exemple un courant marin. Toutefois, pour être embarquée sur un véhicule 2 aquatique, une turbine doit être de dimensions modestes tout en ayant suffisamment de couple et permettre de capter des flux hydrauliques quelques soient leur orientation.

Dans ce contexte, la demanderesse a développé une solution technique qui permet de capter tant un flux d'eau, qu'un flux d'air quelques soient leur direction, de le canaliser en un flux laminaire, et d'accélérer le flux laminaire en direction d'une turbine adaptée à entrainer un alternateur.

Comme illustré aux figures 1 et 2, le système de traction 1 est équipé d'un dispositif de transformation 33 d'une énergie cinétique d'un flux de fluide 3300 en énergie mécanique au travers d'une turbine 3301 montée rotative et adaptée à entrer en rotation en réaction à l'énergie cinétique d'un flux de fluide 3300.

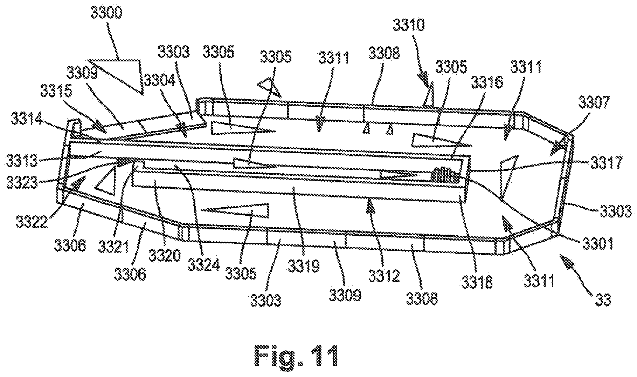

Le flux de fluide 3300 est illustré à la figure 11 par des flèches orientées en direction du dispositif de transformation 33. Ici, la turbine 3301, par exemple de type à cage à écureuil, c'est-à-dire, une turbine qui comporte une roue à aubes montée sur un axe de rotation. L'axe de rotation est perpendiculaire au flux de fluide et connecté à un récepteur mécanique rotatif 3302, tel qu'un alternateur, de manière à transformer l'énergie mécanique de rotation de la turbine 3301 en énergie électrique (illustré à la figure 11).

Dans l'exemple illustré à la figure 11, le dispositif de transformation 33 comporte, d'une part, des organes de captage 3303 multidirectionnels de flux de fluide 3300 permettant de capter un flux de fluide 3300 quelque soit son orientation, et d'autre part, des moyens de guidage 3304, de manière à générer un flux de fluide laminaire 3305 en direction de la turbine 3301. Il est à noter que le flux de fluide laminaire 3305 est illustré à la figure 11 par des flèches situées à l'intérieur du dispositif de transformation 33 suivant les moyens de guidage en direction de la turbine 3301.

Ici, les moyens de guidage 3304 du flux de fluide 3300 sont de préférence horizontaux et constitués d'une chambre multi-faces 3306 qui s'étend horizontalement. La chambre multi-faces 3306 est délimitée, d'une part, supérieurement et inférieurement respectivement par un plancher supérieur et un plancher inférieur 3307 qui s'étendent dans une direction parallèle à la chambre multi-faces 3306, et d'autre part, latéralement par des faces latérales 3308 qui s'étendent de manière perpendiculaire à la chambre multi-faces 3306 sur une hauteur définie.

Comme illustré à la figure 1, dans l'optique d'intégrer le dispositif de transformation 33 au véhicule 2, les faces latérales 3308 de la chambre multi-faces 3306 se confondent avec un bâti 21 du véhicule 2. Dans le cas d'un dispositif de transformation 33 agissant comme une hydrolienne immergée ou partiellement immergée, les faces latérales 3308 de la chambre multi-faces 3306 se confondent avec des parois externes 210 du bâti 21 du véhicule 2 ici, au niveau de la coque 211 du véhicule 2 soit à proximité de la ligne de flottaison du véhicule 2 soit afin d'être totalement immergées sous la ligne de flottaison du véhicule 2.

A l'inverse dans le cas d'un dispositif de transformation 33 agissant comme une éolienne, celui-ci doit être disposé au niveau d'une structure aérienne du bâti 21 du véhicule 2, par exemple au niveau du auvent 20. Dans ce cas, les faces latérales 3308 de la chambre multi-faces 3306 se confondent avec des parois externes latérales 200 du auvent 20.

Dans l'exemple illustré à la figure 11, chaque face latérale 3308 comporte à un organe de captage 3303 de flux de fluide 3300, chaque organe de captage 3303 est formé par un volet mobile 3309 en rotation autour d'un axe. Il découle de cette caractéristique que chaque organe de captage 3303 est monté mobile entre une position fermée et une position ouverte. Ainsi, lorsque l'organe de captage 3303 est en position fermée, il exerce une réaction mécanique au flux de fluide 3300 cloisonnant la chambre multi-faces 3306. A l'inverse, lorsque l'organe de captage 3303 est en position ouverte le flux fluide 3300 pénètre dans la chambre multi-faces 3306.

Dans le présent exemple, l'organe de captage 3303 est conçu mécaniquement pour passer d'une position fermée à une position ouverte, et vice versa. Dans cet objectif, chaque organe de captage 3303 comporte un seuil de réaction 3310 mécanique déterminé illustré à la figure 11 par une flèche de réaction. Ce seuil de réaction 3310 mécanique peut être conditionné par exemple via des moyens mécaniques élastiques contraignant la rotation du de l'organe de captage 3303 autour de son axe. Dès lors, lorsqu'un flux de fluide atteint une vitesse suffisante pour appliquer sur l'organe de captage 3303 une force supérieure à son seuil de réaction mécanique 3310, l'organe de captage 3303 passe de sa position fermée à sa position ouverte. Une fois l'organe de captage 3303 en position ouverte, le flux de fluide 3300 pénètre dans la chambre multi-faces 3306.

Comme illustré à la figure 11, la chambre multi-faces 3306 comporte un canal de guidage 3311 de flux de fluide 3300. Le canal de guidage 3311 présente la particularité d'être délimité latéralement, d'une part, par toutes les faces latérales 3308 de la chambre multi-faces 3306, et d'autre part, par une paroi interne 3312 qui s'enroule sur elle même de manière à suivre l'orientation des faces latérales 3308. A ces fins, la paroi interne 3312 comporte une première section 3313 reliée d'un premier côté 3314 à une face latérale 3308 disposée à une première extrémité 3315 du canal de guidage 3311, la première section 3313 s'étendant dans la direction longitudinale de la chambre multi-faces 3306. Une seconde extrémité 3316 opposée à la première extrémité 3314 de la première section 3313 est reliée à une deuxième section 3317 de la paroi interne 3312 qui fait office de jonction avec une première extrémité 3318 d'une troisième section 3319 de la paroi interne 3312. La troisième section 3319 s'étend également dans la direction longitudinale de la chambre multi-faces 3306 jusqu'à une seconde extrémité 3320 opposée à la première extrémité 3318 et au niveau de laquelle la paroi interne 3312 est prolongée par une quatrième section 3321 située au niveau d'un second côté 3322 du canal de guidage 3311. La quatrième section 3321 de la paroi interne 3312 définit une zone de jonction 3323 qui marque la fin du canal de guidage 3311 et communique avec un canal d'accélération 3324.

Dans le présent exemple, le canal d'accélération 3324 s'étend longitudinalement dans un interstice ménagé entre les première et troisième sections 3313, 3319 de la paroi interne 3312 jusqu'à la turbine 3301 qui est positionnée à proximité de la deuxième section 3317 de la paroi interne 3312. Avantageusement, la quatrième section 3321 de la paroi interne 3312 participe à la réduction de la section d'une lumière du canal d'accélération 3324 favorisant une accélération du flux de fluide laminaire 3305 par effet venturi. Avantageusement, l'accélération du flux de fluide laminaire 3305 permet d'augmenter le couple de la turbine 3301 et ainsi d'optimiser le rendement de production électrique du dispositif de transformation 33.

Comme illustré à la figure 11, lorsque le flux de fluide 3300 pénètre dans la chambre multi-faces 3306 par la face latérale 3308 la plus éloignée du canal d'accélération 3324 située niveau du premier côté 3315 du canal de guidage 3311, le flux de fluide 3300 est canalisé en flux de fluide laminaire 3305 et dirigé directement vers la turbine 3301. Avantageusement, le canal de guidage 3311 coopère avec le canal d'accélération 3324 de manière à contraindre le flux de fluide laminaire 3305 à effectuer une course sensiblement en forme de spirale.

A l'inverse, si le flux de fluide 3300 pénètre par une face latérale 3308 qui comporte une ou plusieurs faces latérales 3308 en amont de sa position, c'est-à-dire, en direction du premier côté 3315 du canal de guidage 3311. Dans ce cas, le flux de fluide 3300 entrant dans la chambre multi-faces 3306 commence par mettre la chambre multi-faces 3306 sous pression, ensuite, le canal de guidage 3311 transforme le flux de fluide 3300 en flux de fluide laminaire 3305 et le dirige en direction de la turbine 3301 via le canal d'accélération 3324, au passage dans ce dernier, le flux de fluide laminaire 3305 accélère par effet venturi, c'est-à-dire, de par le rétrécissement de la lumière du canal d'accélération 3324.

Il est à noter, que lorsqu'un flux de fluide 3300, 3305 entre dans la chambre multi-faces 3306, le flux de fluide 3300, 3305 applique une pression interne sur les organes de captage 3303 augmentant ainsi leur seuil mécanique de réaction 3310 à un flux de fluide 3300 extérieur. Avantageusement, cette caractéristique favorise uniquement l'entrée du flux de fluide 3300 le plus puissant au sein de la chambre multi-faces 3306. Ainsi, lorsque l'orientation du flux de fluide 3300 le plus fort change, les organes de captage 3303 réagissent : l'organe de captage 3303 correspondant à la précédente orientation du flux de fluide 3300 le plus fort se ferme, dans le même temps le nouvel organe de captage 3303 se situant dans l'axe de la nouvelle orientation du flux de fluide 3300 le plus fort s'ouvre pour le laisser pénétrer dans la chambre multi-faces 3306.

Comme illustré à la figure 1, le fait de capter un flux de fluide 3300 dans une chambre multi-faces 3306 qui s'étend horizontalement permet de gagner en compacité et favorise la superposition de plusieurs dispositif de transformation 33 les uns sur les autres. Ici, le véhicule 2 est équipé de plusieurs dispositifs de transformation 33 disposés, d'une part, au niveau du auvent 20 du véhicule 2 et agissant ainsi comme éolienne, le auvent 20 étant également recouvert de panneaux photovoltaïques 30, et d'autre part, au niveau de la coque 211 du véhicule 2 où ils agissent comme hydrolienne.

L'utilisation d'un canal d'accélération 3324 afin d'accélérer le flux de fluide laminaire 3305, permet d'estimer que la puissance électrique de la turbine 3301 suit approximativement « la limite de Betz ». En utilisant, la formule de « la limite de Betz » il est possible d'estimer une puissance en Watt à partir notamment de la vitesse d'un fluide selon la formule suivante :

$$Pw = 16/27 \times \tfrac{1}{2} \times \rho \times S \times V^3$$

Avec,

Pw = puissance en watts
p = masse volumique du fluide
S = surface en m$^2$
V = vitesse du fluide en m/s

Dans l'exemple illustré à la figure 2, la production d' électricité utile, en sortie des moyens de production 33 électrique, est transmise à un convertisseur 32 qui alimentent en électricité à une tension déterminée des générateurs de gaz 4 de combustion. Ici, les générateurs de gaz 4 sont formés par des cellules à électrolyse 40 qui sont organisées par groupe. De préférence, les cellules à électrolyse 40 sont organisées selon trois groupes : un groupe solaire 41 qui est alimenté par les panneaux photovoltaïques 30, un groupe éolien 42 qui est alimenté par un dispositif de transformation 33 agissant comme éolienne, et un groupe hydraulique 43 qui est alimenté par un dispositif de transformation 33 agissant comme hydrolienne.

De préférence, chaque groupe 41, 42, 43 de cellules à électrolyse 40 comporte plusieurs cellules à électrolyse 40 montées en parallèle. Les trois groupes 41, 42, 43 de cellules à électrolyse 40 sont également montés en parallèle les uns par rapport aux autres.

Comme expliqué dans le Tableau 1 ci-dessous, les moyens de production électrique 3 permettent d'alimenter à partir de trois types d'énergie renouvelable (solaire, éolien, hydraulique) au moins un groupe 41, 42, 43 de cellules à électrolyse 40 correspondant à l'énergie renouvelable disponible. Le fait de produire de l'électricité à partir de trois énergies renouvelables différentes permet de maintenir une production de gaz de combustion en quasi permanence. Chaque source d'énergie renouvelable présente une disponibilité qui est fonction des conditions atmosphériques. Ici, les moyens de production électrique 3 peuvent produire de l'électricité en quasi permanence palliant au problème d'intermittence habituelle des sources d'énergie renouvelable.

Tableau 1

| Situation | Photovoltaïque | Eolien | Hydrolien | Stockage gaz |
|---|---|---|---|---|
| Jour Temps clair Calme | Forte | Nulle Echelle de Beaufort < 2 | Faible | Fort |
| Nuit Temps clair Calme | Nulle | Nulle Echelle de Beaufort < 2 | Faible | Faible |
| Jour Temps clair Agi té | Forte | Moyenne Echelle de Beaufort 2 à 4 | Moyenne | Fort |

(suite)

| Situation | Photovoltaïque | Eolien | Hydrolien | Stockage gaz |
|---|---|---|---|---|
| Nuit Temps clair Agité | Nulle | Moyenne Echelle de Beaufort 2 à 4 | Moyenne | Moyenne |
| Jour Couvert Calme | Moyenne | Nulle Echelle de Beaufort < 2 | Faible | Faible |
| Nuit Couvert Calme | Nulle | Nulle Echelle de Beaufort < 2 | Faible | Faible |
| Jour Couvert Agité | Moyenne | Forte Echelle de Beaufort > 4 | Forte | Fort |
| Nuit Couvert Agité | Nulle | Forte Echelle de Beaufort > 4 | Forte | Fort |

Dans le présent exemple, les cellules à électrolyse 40 sont alimentées en eau provenant soit d'un réservoir soit d'un milieu aquatique environnant lorsque le véhicule 2 est aquatique.

Chaque groupe 41, 42, 43 de cellules à électrolyse 40 est alimenté en catalyseur ou électrolyte tel que du chlorure de sodium (NaCl) aqueux sous forme ionique ($Na^+$ (aq), $Cl^-$ (aq)) qui se trouve naturellement dans l'eau mer.

De manière connue, l'électrolyse de l'eau permet de produire du dihydrogène et du dioxygène sous forme gazeuse selon l'équation suivante :

$$2\ H_2O\ (1)\ \text{->}\ O_2\ (g) + 2\ H_2\ (g)$$

Ces deux gaz mêlés l'un à l'autre sous pression présente des propriétés explosives remarquables que nous souhaitons exploiter dans le cadre du système de traction 1 de la présente invention.

Toutefois, ces propriétés explosives nous contraignent à isoler le dihydrogène et le dioxygène l'un de l'autre, et à les stocker indépendamment. A cet effet, de manière connue lors de l'électrolyse de l'eau, le dioxygène se forme par une réaction d'oxydation au niveau de l'anode d'une cellule à électrolyse 40. A l'inverse, le dihydrogène se forme par une réaction de réduction au niveau de la cathode. Dans ce contexte, il est possible d'isoler la production de dihydrogène de la production de dioxygène en séparant la cathode et l'anode.

Suivant ce précepte, par exemple, chaque cellule à électrolyse 40 équipant le système de traction 1 peut consister en une chambre remplie d'un électrolyte qui correspond à un liquide aqueux électrolytique sous pression.

Ici, le liquide aqueux électrolytique désigne de l'eau chargée en sels électrolytiques favorisant la conductivité et la formation du dioxygène et du dihydrogène.

Dans le présent exemple, la chambre de chaque cellule à électrolyse 40 comporte un compartiment transitoire équipé, d'une part, d'une alimentation en électrolyte favorisant les réactions d'oxydo/réduction, et d'autre part, d'une alimentation d'eau chaude 400 sous pression assurant l'appoint mécaniquement par différentiel de pression et/ou de volume de manière à ce que l'électrolyte reste au sein de la cellule à électrolyse 40.

Le compartiment transitoire est relié, d'une part, à un compartiment anodique dans lequel est disposée une électrode anodique ou anode totalement immergée, et d'autre part, à un compartiment cathodique dans lequel est disposée une électrode cathodique ou cathode totalement immergée. Il est à noter que le compartiment transitoire permet également la circulation du courant électrique entre l'anode et la cathode.

Les compartiments cathodique et anodique comportent respectivement une sortie d'eau chargée en dihydrogène 401 et une sortie d'eau chargé en dioxygène 402 qui sont toutes deux connectées à un séparateur eau/gaz adapté à séparer le dioxygène et/ou le dihydrogène du liquide aqueux électrolytique. En sortie du séparateur eau/gax, le dihydrogène et le dioxygène sont respectivement envoyés dans un circuit de compression/stockage 403, 404 qui leur est spécifique, alors que l'électrolyte emprunte une canalisation de retour afin de retourner dans la chambre de la cellule à électrolyse 40.

Comme illustré à la figure 2, chaque cellule à électrolyse 40 de chaque groupe 41, 42, 43 est connectée, d'une part, au circuit de compression/stockage 403 du dihydrogène, et d'autre part, au circuit de compression/stockage 404 du dioxygène. Chaque circuit de stockage 403, 404 permet d'acheminer respectivement le dihydrogène et le dioxygène à une unité de stockage 5 pressurisée qui leur est dédiée. Ainsi, le système de traction 1 comporte une première unité de stockage 50 dédiée au stockage du dihydrogène, et une seconde unité de stockage 51 dédiée au stockage du dioxygène.

Chaque unité de stockage 50, 51 est équipée d'un compresseur 52 adapté à comprimer le gaz avant qu'il soit stocké. Le compresseur 52 est disposé en entrée 53, 54 d'une enceinte de stockage 55, 56 qui comporte un premier pressostat de sécurité permettant de contrôler la pression interne de l'enceinte de stockage 55, 56. Le premier pressostat de sécurité est programmé pour déclencher une alerte par exemple sonore, lorsque la pression approche d'un seuil de résistance mécanique prédéterminé.

De surcroit, afin de prévenir toute rupture accidentelle de l'enceinte de stockage 55, 56, celle-ci est enveloppée par un compartiment de sécurité 59, 60 vide à basse pression, par exemple à une pression inférieure à 5 bars. Le compartiment de sécurité est équipe d'un second pressostat de sécurité paramétré de manière à détecter toute fuite, même minime, de l'enceinte de stockage 55, 56. Ainsi, en cas d'une faible variation de la pression d'un compartiment de sécurité 59, 60, détectée par le second pressostat, ce dernier est programmé pour déclencher une alerte, par exemple un signal sonore, signalant une pression anormale du compartiment de sécurité 59, 60. Ainsi, il est possible de mettre tout le système à l'arrêt, vidanger le compartiment 59, 60 concerné par l'alerte, localiser la zone de rupture et la traiter.

De plus, en sortie 57, 58 de chaque enceinte de stockage 55, 56 est disposé un détendeur permettant de dépressuriser au moins partiellement le gaz stocké avant qu'il ne pénètre sous une pression moindre dans un circuit d'alimentation 6 afin d'alimenter un moteur thermique 7.

Comme indiqué ci-avant au travers de la formule de l'électrolyse de l'eau, cette réaction produit deux fois plus de quantité et donc deux fois plus de volume de dihydrogène que de dioxygène. Ce paramètre est pris en compte dans la conception de l'enceinte de stockage 55 de dihydrogène qui présente une capacité de stockage deux fois plus importante que la capacité de stockage de l'enceinte de stockage 56 du dioxygène.

Dans l'exemple illustré à la figure 2, le circuit d'alimentation 6 comporte une première canalisation 60 acheminant sous pression le dihydrogène depuis son unité de stockage 50 vers un mélangeur 61. Parallèlement, une deuxième canalisation 62 achemine le dioxygène sous pression depuis son unité de stockage 51 vers le mélangeur 61. Le mélangeur 61 permet de mêler le dihydrogène et le dioxygène tous deux pressurisés afin de créer un mélange gazeux adapté à exploser par thermo catalyse. Le mélangeur 61 comprend également une arrivée d'air comprimé afin de permettre au mélangeur de mêler l'air comprimé au dioxygène et au dihydrogène.

Avantageusement, l'apport en air comprimé à pression sensiblement identique à celle du dihydrogène et du dioxygène permet de faire varier la richesse ou la concentration en carburant du mélange explosif afin de moduler le régime du moteur thermique 7 de 0% lorsque le moteur thermique 7 est à l'arrêt à 100% lorsque le moteur thermique 7 est à plein régime.

De plus, l'apport en air comprimé favorise également l'explosion et la disponibilité du comburant en ajoutant au dioxygène issu de l'enceinte de stockage 56 au dioxygène naturellement disponible dans l'air comprimé.

Enfin, l'apport d'air comprimé facilement disponible permet de compléter à moindre coût la volumétrie du mélange gazeux nécessaire au fonctionnement du moteur thermique 7.

En sortie du mélangeur 61, le mélange gazeux est injecté dans le moteur thermique 7 via un conduit d'admission 63.

De la même manière que pour l'enceinte de stockage 55, 56, le circuit d'alimentation 6 peut présenter une enveloppe de sécurité équipée de pressostat pour chacun de ces éléments : les canalisations 60, 62, le mélangeur 61, le conduit d'admission 63 etc.

Selon un premier exemple de réalisation de l'invention, le système de traction 1 est équipé d'un moteur thermique 7 standard. Le conduit d'admission 63 alimente une admission 70 du moteur thermique 7 avec un mélange gazeux à basse pression comprise de préférence de quelques centaines de millibars à quelques bars.

Avantageusement, il est admis que la combustion du mélange gazeux dihydrogène/dioxygène pressurisé ne produit que de la vapeur d'eau selon la formule ci-après :

$$2\ H_2\ (g) + O_2\ (g) = H_2O\ (g)$$

Le dihydrogène et dioxygène sont des gaz de combustion, ici le dihydrogène jouant un rôle de carburant alors que le dioxygène joue son rôle habituel de comburant en complément du dioxygène issu de l'air comprimé. Dans ce contexte, en échappement 71 du moteur thermique 7 se trouve de la vapeur d'eau et une fraction non consommée du mélange gazeux introduit initialement dans l'admission 70 du moteur thermique 7. Afin d'éviter tout rejet de gaz en échappement 71 du moteur thermique 7 et d'optimiser le rendement du moteur thermique 7, le système de traction 1 comprend un dispositif de recyclage 72 des gaz d'échappement qui est disposé au niveau de l'échappement 71.

Dans cet exemple, le dispositif de recyclage 72 des gaz d'échappement permet de capter, directement en échappement 71 du moteur thermique 7, les gaz de combustion non consommés et de les réinjecter au niveau de l'admission 70 du moteur thermique 7. A cet effet, le dispositif de recyclage 72 comporte un échangeur thermique permettant de condenser les gaz d'échappement afin d'obtenir de l'eau chaude entre 70°C et 90°C qui est chargée en gaz de combustion non consommés. Afin de réinjecter les gaz de combustion non consommés dans le moteur thermique 7, le dispositif de recyclage 72 est adapté à séparer la vapeur d'eau des gaz de combustion non consommée. Dans cet exemple, la vapeur d'eau est séparée des gaz de combustion non consommés par condensation. A pression atmosphérique, la vapeur d'eau se condense à une température inférieure à 100°C, alors que le dihydrogène et le dioxygène ne peuvent pas être condensés à pression atmosphérique à des températures positives.

Afin de condenser la vapeur d'eau, le dispositif de recyclage 72 utilise un liquide caloporteur. Ici, le dispositif de recyclage 72 consiste en un échangeur thermique qui utilise de l'eau froide comme liquide caloporteur. L'eau froide présente de préférence une température inférieure à 20°C et provient d'une canalisation d'approvisionnement 7200 en eau qui est alimentée par une pompe hydraulique 7201.

De préférence, dans le cas d'un véhicule 2 aquatique, la pompe hydraulique 7201 prélève l'eau dans le milieu environnant. Afin d'éviter d'obstruer les canalisations du système de traction 1, une filtration gravillionnaire est réalisée au niveau de la pompe 7201, par exemple via un filtre céramique multi-niveaux.

En sortie du dispositif de recyclage 72, d'un côté, le condensat de vapeur d'eau est évacué vers une évacuation 7202 en transitant par une première canalisation d'évacuation 7203, alors que les gaz de combustion non consommés sont réinjectés via un conduit de récupération 74 dans le mélangeur 61. Il est à noter que les gaz de combustion non consommés sont compressés en entrée du mélangeur 61 de manière à ce que le mélangeur 61 délivre au conduit d'admission 63 un mélange de gaz homogène à equi-pression.

En outre, les eaux chaudes qui ont servi de liquide caloporteur pour refroidir les gaz d'échappement sont collectées en sortie du dispositif de recyclage 72 et transférées, via une canalisation de recyclage 740, vers un mélangeur/soupape 8 à eaux chaudes.

Le système de traction 1 comporte également un système de refroidissement 75 du moteur thermique 7. Le système de refroidissement 75 du moteur thermique 7 utilise une circulation d'un liquide caloporteur afin de refroidir le moteur thermique 7. Ici, le système de refroidissement 75 utilise de l'eau froide comme liquide caloporteur. Comme pour le dispositif de recyclage 72, l'eau froide présente de préférence une température inférieure à 20°C et provient d'une ramification 7204 de la canalisation d'approvisionnement 7200 en eau.

En sortie du système de refroidissement 75, les eaux chaudes produites lors du refroidissement du moteur thermique 7 sont transférées vers le mélangeur/soupape 8 à eaux chaudes via une canalisation de récupération 7500.

Dans ce contexte, le mélangeur/soupape 8 à eaux chaudes réceptionne les eaux chaudes en provenance du système de refroidissement 75 du moteur thermique 7 et du dispositif de recyclage 72, puis transfère une première partie de ces eaux chaudes dans un circuit d'alimentation 80 vers les canaux d'alimentation 400 à eaux chaudes sous des cellules à électrolyse 40.

Le mélangeur/soupape 8 rejette une seconde partie des eaux chaudes vers une évacuation 7202, via une seconde canalisation d'évacuation 83.

En outre, le système de traction 1 comporte un système de sécurité 9 anti-retour de flamme qui comporte un premier couple de clapet anti-retour de flamme disposé au niveau des entrée et sortie du mélangeur 61, un deuxième couple de clapet anti-retour de flamme disposé au niveau de l'admission 70 et d'un échappement 72 du moteur thermique 7, et un troisième couple de clapet anti-retour disposé au niveau des entrée et sortie de l'échangeur du dispositif de recyclage 73 des échappements.

L'utilisation d'un moteur thermique 7 standard permet, d'une part, d'adapter facilement le système de traction 1 à un parc de véhicules 2 déjà en circulation, et d'autre part, de réaliser un circuit d'alimentation 6 réversible qui est adapté à basculer vers une alimentation en carburant fossile en cas de pénurie momentanée d'alimentation de gaz de combustion issus des énergies renouvelables. Toutefois, l'utilisation d'un moteur thermique standard présente un faible rendement de transformation de l'énergie des gaz de combustion en énergie mécanique.

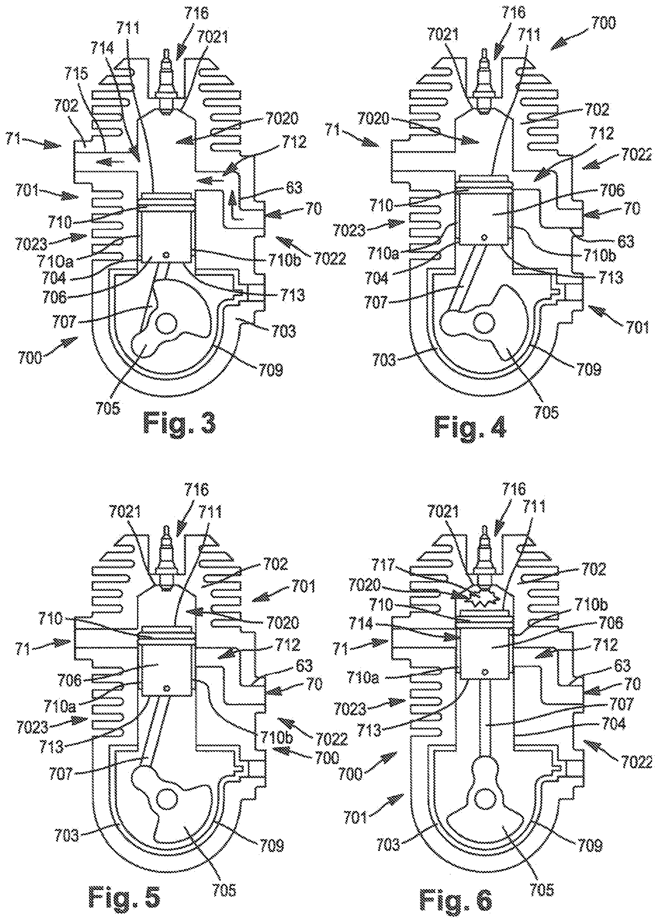

Dans un deuxième exemple de réalisation de l'invention illustré aux figures 3 à 10, la demanderesse s'est attachée à développer un nouveau moteur thermique deux temps conservant les principaux avantages du moteur thermique deux temps standard tout en éliminant ses principaux inconvénients.

De manière générale, un moteur thermique deux temps présente les avantages de posséder une structure mécanique simple facilitant son entretien, d'être plus puissant, moins encombrant et plus léger qu'un moteur quatre temps de même cylindre, d'être utilisable dans toutes les positions sans modification substantielle, de présenter une plage d'utilisation très étendue des bas régimes inférieurs à 2000 tr/min aux très haut régimes supérieurs à 30000 tr/min, de bon rendement de l'ordre de 430 ch/L sans turbo ni compresseur, et dans le cas d'un moteur deux temps à injection directe de faible consommation de carburant, inférieure à 3 L/100km.

Malgré tous ces avantages, le moteur thermique deux temps autrefois largement utilisé a été peu à peu remplacé par le moteur quatre temps plus complexe mais beaucoup moins polluant. En effet, pour les moteurs deux temps, deux principaux phénomènes génèrent une pollution importante en échappement, d'une part, une distance parcourue trop importante par le piston avant la fermeture de la lumière d'échappement qui provoque une perte de carburant non brûlé, et d'autre part, des émissions d'huiles plus ou moins brûlées qui sont rejetées dans l'atmosphère et proviennent d'un lubrifiant présent dans le carburant afin de lubrifier le cylindre. Ceci est du au fait que l'admission du carburant soit réalisée dans le carter bas, où le carburant est pré comprimé avant de passer via le cylindre dans le carter haut. De ce fait, le moteur deux temps ne dispose pas de lubrification par la présence d'huile isolée et maintenue dans le carter bas. L'huile de lubrification est donc mélangée à l'air et au combustible.

Comme illustré aux figures 3 à 10, la demanderesse a développé un moteur deux temps 700 à explosion comprenant un carter moteur 701 divisé en deux compartiments isolés à tout moment et en toutes circonstances l'un de l'autre. En effet, le carter moteur 701 comporte un carter haut 702 dans lequel est ménagée une chambre à explosion 7020, et un carter bas 703. Le carter haut 702 et le carter bas 703 sont reliés par un cylindre 704. Dans cet exemple, le carter bas 703 est rempli d'huile moteur assurant une bonne lubrification d'un vilebrequin 705 qui est disposé au sein du carter bas 703. L'huile moteur permet également de lubrifier un piston 706 qui est mobile entre une position de repos dans laquelle il est positionné dans le cylindre 704 entre le carter haut 702 et le carter bas 703, et une position de compression dans laquelle il atteint un sommet 7021 de la chambre à explosion 7020. Le sommet 7021 de la chambre à explosion 7020 se situe dans le carter haut 702, à l'opposé du carter bas 703. Au cours d'un cycle moteur, le piston 706 passe d'une position à l'autre en coulissant par un mouvement de translation au sein du cylindre 704 depuis le carter bas 703 jusqu'au sommet 7021 de la chambre à explosion 7020 et redescend vers le carter bas 703 pour achever le cycle moteur.

Ici, le vilebrequin 705 est relié de manière excentrique au piston 706 au travers d'une bielle 707. La bielle 707 est reliée par une liaison mécanique rotative, d'une part, axialement au piston 706, et d'autre part, de manière excentrique au vilebrequin 705 à l'aide d'une rotule mécanique. Cette liaison mécanique excentrique de la bielle 707 au niveau du vilebrequin 705 permet de transformer le mouvement de translation du piston 706, au cours du cycle moteur, en mouvement de rotation continue du vilebrequin 705. En outre, le vilebrequin 705 est solidaire d'un arbre de rotation lui même relié à un récepteur mécanique rotatif adapté à entraîner des moyens de propulsion du véhicule 2.

Dans cet exemple, le moteur deux temps 700 comporte des moyens d'étanchéité qui coopèrent avec le piston 706 de manière à isoler hermétiquement le carter haut 702 du carter bas 703 à tout moment du cycle moteur et en toutes circonstances.

Avantageusement, l'isolation du carter bas 703 par rapport au carter haut 702, à tout moment et en toutes circonstances, permet d'éviter que l'huile moteur présente dans le carter bas 703 ne transite jusqu'à la chambre à explosion 7020 où elle serait partiellement et/ou totalement brûlée et/ou rejetée dans les échappements. Cette caractéristique contribue donc à l'élimination de rejets d'échappement polluants, l'huile du carter bas 703 ne passant jamais dans la chambre à explosion 7020. De plus, il n'est plus nécessaire d'introduire de composés additionnels destinés à lubrifier le cylindre 704 pour faciliter la course du piston 706 lors du cycle moteur. Ces composés additionnels qui étaient jusqu'alors partiellement brûlés et rejetés en échappement du moteur constituaient une source importante de pollution.

Du fait, de l'isolation du carter haut 702 par rapport au carter bas 703, le moteur deux temps 700 comprend une admission moteur 70 dont la lumière d'admission 712 directement ménagée d'un premier côté 7022 du carter haut 702 au niveau de la chambre à explosion 7020. Ainsi, il n'est plus nécessaire d'ajouter au carburant un lubrifiant pour graisser le cylindre 704.

Avantageusement, l'introduction d'un mélange gazeux sous pression permet de réduire les dimensions de la lumière d'admission 712 par rapport à celles de la lumière d'admission d'un moteur thermique standard. Dans le cadre de la cinématique du piston 706, le fait de réduire les dimensions de la lumière d'admission 712 permet d'optimiser la coopération entre le piston 706 et la lumière d'admission 712. En effet, il est possible de positionner la lumière d'admission 712 dans une position plus optimale de manière à limiter la course du piston 706 entre la lumière d'admission 712 et une lumière d'échappement 714 qui est disposée supérieurement à la lumière d'admission. Cette caractéristique permet de limiter le temps de lavage de la chambre à explosion 7020 par le mélange gazeux frais avant le redémarrage d'un cycle moteur. Cette caractéristique réduit avantageusement la consommation en mélange gazeux. Ici, la lumière d'admission 712 est connectée à un conduit d'admission 63 par lequel transite un flux d'un gaz sous pression adapté à exploser par thermo catalyse.

De manière connue, lorsque le moteur deux temps 700 est en fonctionnement, l'huile contenue dans le carter bas 703 monte en température et se dilate. Ainsi, le volume d'huile contenu dans le carter bas 703 présente une expansion de 8 % à 15% de son volume à froid. Dès lors, les moyens d'étanchéité permettent de maintenir l'isolation hermétique entre le carter bas 703 et le carter haut 702, mais aussi d'éviter que de l'huile expansée ne s'échappe par la lumière d'admission 712 et/ou la lumière d'échappement 714. Avantageusement, les moyens d'étanchéité contribuent à éviter que de l'huile de lubrification ne soit rejetée en échappement du moteur deux temps 700.

A cet effet, les moyens d'étanchéité comporte au moins un organe d'étanchéité 710 qui équipe le piston 706 de préférence en partie supérieure 711 du piston 706. Dans cet exemple, le piston comporte un organe d'étanchéité 710 formé par un jeu de deux segments disposés à proximité l'un de l'autre, les deux segments ceinturant le piston 706 au niveau de sa partie supérieure 711.

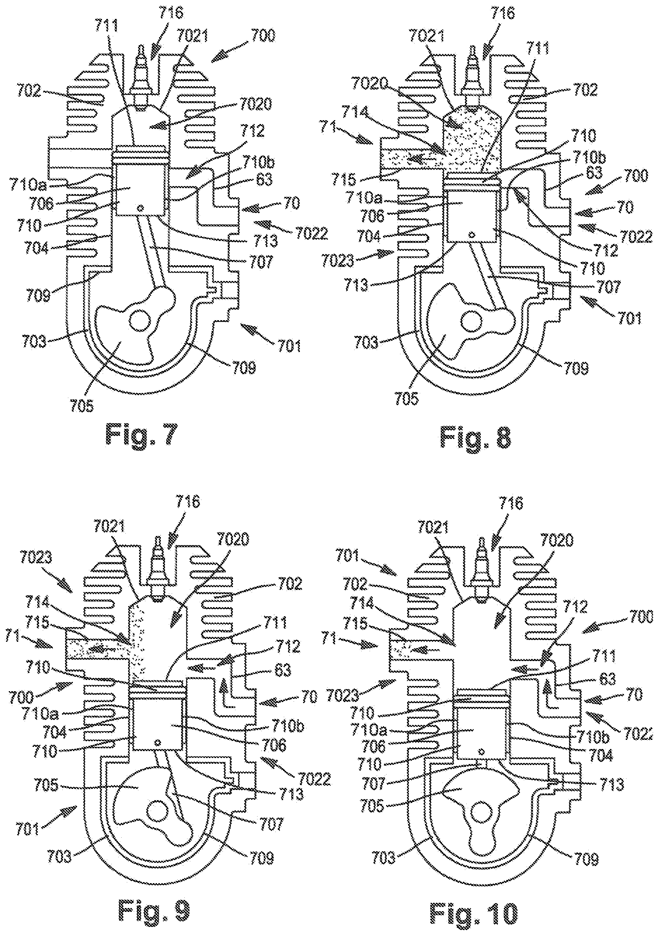

L'organe d'étanchéité 710 permet d'isoler le carter bas 703 du carter haut 702 depuis la position de point mort bas du piston (illustré à la figure 10) jusqu'à ce que l'organe d'étanchéité 710 atteigne et dépasse la lumière d'admission 712 et/ou la lumière d'échappement 714 (illustré aux figures 4 à 6). Dans cette situation de la cinématique du piston 706, afin que de l'huile ne s'échappe pas du carter bas 703, les moyens d'étanchéité comportent deux éléments d'étanchéité 710a, 710b latéraux. Les éléments d'étanchéité 710a, 710b latéraux sont montés sur le piston 706 de manière à obstruer respectivement la lumière d'échappement 714 et la lumière d'admission 712. A ces fins, les éléments d'étanchéité 710a, 710b latéraux s'étendent longitudinalement de part et d'autre du piston 706.

En pratique, les éléments d'étanchéité 710a, 710b latéraux sont respectivement formés par deux segments qui s'étendent selon une direction longitudinale qui est perpendiculaire à celle dans laquelle s'étend l'organe d'étanchéité 710. De par leur configuration, les éléments d'étanchéité 710a, 710b latéraux contribuent à confiner l'huile de le carter bas 703 et donc à éviter tout rejet polluant en échappement du moteur deux temps 700.

Selon un autre mode de réalisation, les éléments d'étanchéité 710a, 710b peuvent être remplacés par un système d'expansion 709 qui est formé par une membrane expansible. La membrane expansible peut être réalisée dans un matériau polymérique et/ou composite présentant des propriétés de déformation mécanique. Ces propriétés de déformation mécanique permettent à la membrane de se déformer lors de la course ascendante et descendante du piston 706. En se déformant, la partie supérieure de la membrane se déforme et/ou s'expanse de façon à venir obstruer la lumière d'admission 712 et/ou la lumière d'échappement 714. Lors de la course descendante du piston 706, la membrane se rétracte et reprend sa forme initiale.

Selon un autre mode de réalisation, les éléments d'étanchéité 710a, 710b peuvent être remplacés par des clapets montés au niveau des lumières d'admission 712 et/ou d'échappement 714. Avantageusement, lorsque l'organe d'étanchéité 710 atteint et/ou dépasse les lumières d'admission 712 et/ou d'échappement 174, les clapets sont configurés pour les obstruer.

Dans cet exemple, le flux de gaz sous pression correspond au mélange gazeux dihydrogène/dioxygène/air pressurisé qui provient du mélangeur 61 via le conduit d'admission 63.

Afin de générer l'explosion du mélange gazeux, le moteur deux temps 700 comporte un système d'allumage 716 adapté à créer un arc électrique capable de catalyser thermiquement l'explosion du mélange gazeux pressurisé et comprimé dans le cycle. Ici, le système d'allumage 716 est formé par des bougies d'allumage qui sont disposées au sommet 7021 de la chambre à explosion 7020.

De plus, le moteur deux temps 700 comporte un échappement moteur 71 dont la lumière d'échappement 714 est ménagée d'un second côté 7023 du carter haut 702 au niveau de la chambre à explosion 7020. Ici, au sein du carter haut 702, la lumière d'échappement 714 est positionnée de manière supérieure à la lumière d'admission 712.

Avantageusement, la lumière d'échappement 714 comporte un système mécanique permettant de faire varier la hauteur de l'ouverture de la lumière d'échappement 714 qui permet de limiter les pertes de charge gazeuse notamment pour les bas et mi régimes moteur. Cette caractéristique permet d'augmenter le couple et la souplesse du moteur deux temps à explosion 700.

Dans le présent exemple, la lumière d'échappement 714 est connectée à un conduit d'échappement 715 acheminant les échappements moteur vers le dispositif de recyclage 72 permettant de récupérer les gaz de combustion non consommés et de les réinjecter par la suite au niveau l'admission 70.

Le moteur deux temps à explosion 700 comporte un système de refroidissement 75 du cylindre 704. Comme décrit précédemment, dans le cas d'un véhicule 2 aquatique, le système de refroidissement 75 est un circuit ouvert utilisant l'eau froide du milieu provenant de la canalisation d'approvisionnement 7200 en eau qui est alimentée par la pompe hydraulique 7201.

En considération des caractéristiques du moteur deux temps à explosion 700 qui viennent d'être décrites, le cycle moteur comporte une étape d'admission illustrée à la figure 3. Lors de cette étape d'admission, le piston 706 est en position de repos, laissant ainsi la lumière d'admission 712 et la lumière de d'échappement 714 en position ouverte. Le mélange gazeux dihydrogène/dioxygène pressurisé pénètre par la lumière d'admission 712 dans la chambre à explosion 7020. Ici, le flux de gaz est schématisé par des flèches pénétrant depuis le conduit d'admission 63 vers la chambre à explosion 7020.

Le cycle moteur comporte une étape de compression qui est illustrée aux figures 4 et 5. Lors de ces étapes, le piston 706 passe de sa position de repos à sa position de compression, le piston 706 se déploie en direction du sommet 7021 de la chambre à explosion 7020. Les organes d'étanchéité 710 assurent alors une fermeture hermétique des lumières d'admission 712 et d'échappement 714. Cette caractéristique favorise, d'une part, une bonne compression du mélange gazeux présent dans la chambre à explosion 7020, et d'autre part, le deuxième organe d'étanchéité 710 situé en partie inférieure 713 du piston 706 permet d'isoler le carter bas 703 de l'admission moteur 70 lorsque le piston 706 est en position de compression ou à proximité de la position de compression (illustré aux figures 5 à 7).

Comme illustré à la figure 6, le cycle moteur comporte une étape d'allumage du mélange gazeux qui se produit lorsque le piston 706 atteint sa position de compression et que sa partie supérieure 711 se situe à proximité immédiate du sommet 7021 de la chambre à explosion 7020. A cet instant, le système d'allumage 716 génère un arc électrique qui déclenche l'explosion du mélange gazeux comprimé. Ici, l'arc électrique est symbolisé par une étincelle 717 située entre le piston 706 et le sommet 7021 de la chambre à explosion 7020.

L'explosion du mélange gazeux comprimé est suivie d'une étape de détente dans laquelle le piston 706 est repoussé vers sa position de repos par la détente des gaz consécutive à l'explosion, la rotation du vilebrequin 707 étant provoqué par la descente de la bielle 707 qui suit le mouvement du piston 706 (illustré à la figure 7).

L'exemple de la figure 8 illustre une étape d'échappement qui correspond à l'instant du cycle moteur dans lequel le piston 706 est repoussé inférieurement à la lumière d'échappement 714. La lumière d'échappement permet alors aux gaz issus de la combustion et aux gaz de combustion non consommés de s'échapper de la chambre d'explosion 7020. Ici, l'échappement des gaz suite à l'explosion est illustré par une flèche au sein de la lumière d'échappement 714 qui sort depuis la chambre à explosion 7020 en direction du conduit d'échappement 715.

Afin de débuter un nouveau cycle moteur, le cycle moteur comporte une étape de lavage de la chambre à explosion 7020 qui est illustrée aux figures 9 et 10. Cette étape consiste à chasser par la lumière d'échappement 714 les gaz issus de la combustion du cycle moteur qui se termine et de les remplacer par du mélange gazeux pressurisé frais. A cet effet, cette étape n'est possible que lorsque le piston 706 est repoussé inférieurement à la lumière d'admission 712 au sein du cylindre 704, situation dans laquelle la lumière d'admission 712 est ouverte et permet l'entrée du mélange gazeux (illustré par des flèches).

Suite à l'étape de lavage un nouveau cycle moteur débute comme décrit ci-dessus.

Il est à noter qu'ici, le surplus de mélange gazeux utilisé pour laver la chambre à explosion 7020 est récupéré au niveau du dispositif de recyclage 72 pour être réinjecter au niveau de la lumière d'admission 712 (voir plus haut). Cette caractéristique permet d'augmenter le rendement du moteur deux temps 700, et d'éviter tout rejet polluant consécutif à un cycle moteur.

Selon une autre caractéristique de l'invention, un tel moteur deux temps 700 peut tout à fait équiper un véhicule terrestre tel qu'une automobile.

Cependant, dans certains cas particuliers, par exemple un véhicule 2 aquatique de petites dimensions ou un véhicule 2 terrestre ou encore dans de rare cas où les conditions atmosphériques ne permettent pas une production suffisante de dihydrogène et de dioxygène pour le fonctionnement du moteur deux temps à explosion 700, la production de dihydrogène et de dioxygène pourra être réalisée de façon débarquée et désynchronisée notamment grâce aux énergies renouvelables exploitées dans la présente invention.

Pour palier à ce problème, il est prévu qu'à la manière d'un véhicule conventionnel, l'utilisateur d'un tel véhicule 2 puisse, avant d'effectuer un déplacement, faire le plein de ses unités de stockage 55, 56 de dihydrogène et de dioxygène sous forme gazeuse ou sous forme de gaz liquéfié.

## Revendications

1. Système moteur pour le combustible dihydrogène, le système comprenant un moteur deux temps (700) à explosion qui comprend un carter moteur (701) comportant un carter haut (702) et un carter bas (703) qui contient de l'huile assurant la lubrification d'un piston (706) depuis une position de point mort bas vers une position de compression, le moteur deux temps (700) comporte des moyens d'étanchéité qui confinent, à tout moment et en toutes circonstances, l'huile dans le carter bas (703), où le carter haut (702) comporte, d'une part, une lumière d'admission (712) permettant d'introduire un carburant gazeux à base dihydrogène et dioxygène, et d'autre part, une lumière d'échappement (714) qui, de par le maintien de l'huile dans le carter bas (703), ne rejette que de la vapeur d'eau chargée en carburant gazeux non consommé, le système moteur comprenant un dispositif de recyclage (72) connecté à la lumière d'échappement (714), le dispositif de recyclage (72) des gaz d'échappement permettant de récupérer le carburant gazeux non consommé et de le réinjecter au niveau de lumière d'admission (712) .

2. Système moteur selon la revendication 1, **caractérisé en ce que** le dispositif de recyclage (72) comporte un échangeur thermique séparant la vapeur d'eau du mélange gazeux non consommé par condensation.

3. Système moteur selon l'une des revendications 1 et 2, **caractérisé en ce que** les moyens d'étanchéité comportent un organe d'étanchéité (710) ménagé en partie supérieure du piston (706).

4. Système moteur selon l'une des revendications 1 à 3, **caractérisé en ce que** les moyens d'étanchéité comportent deux éléments d'étanchéité (710a, 710b) permettant d'obstruer respectivement la lumière d'échappement (714) et la lumière d'admission (712)

5. Système moteur selon la revendication 4, **caractérisé en ce que** les éléments d'étanchéité (710a, 710b) sont montés latéralement sur le piston (706) et s'étendent longitudinalement de part et d'autre du piston (706).

6. Système moteur selon l'une des revendications 1 à 5, **caractérisé en ce qu'**il comporte un mélangeur (61) disposé en amont de la lumière d'admission (712), le mélangeur (61) permet de mêler le dihydrogène et le dioxygène tous deux pressurisés afin de créer le carburant gazeux adapté à exploser par thermo catalyse.

7. Système moteur selon la revendication 6, **caractérisé en ce que** le mélangeur (61) comprend également une arrivée d'air comprimé afin de mêler le dioxygène et le dihydrogène à l'air comprimé, et de varier la concentration en dioxygène et dihydrogène dans le carburant gazeux.

8. Système moteur selon la revendication 7, **caractérisé en ce que** le mélangeur (61) est connecté à la lumière d'admission (712) via un conduit d'admission (70).

9. Système moteur selon l'une des revendications 6 à 8, **caractérisé en ce que** le carburant gazeux non consommé en sortie du dispositif de recyclage (72) est réinjecté via un conduit de récupération (74) au niveau du mélangeur (61).

10. Système moteur selon l'une des revendications 1 à 9, **caractérisé en ce que**, au sein du carter haut (702), la lumière d'échappement (714) est positionnée de manière supérieure à la lumière d'admission (712).

11. Système moteur selon l'une des revendications 1 à 10, **caractérisé en ce que** les moyens d'étanchéité comportent, dans le carter bas (703), un système d'expansion (709) contribuant à maintenir l'huile dans le carter bas (703) à tout moment et en toutes circonstances.


**Patentansprüche**

1. Motorsystem für Diwasserstoff-Kraftstoff, wobei das System einen Zweitakt-Verbrennungsmotor (700) umfasst, der ein Kurbelgehäuse (701) mit einem oberen Gehäuse (702) und einem unteren Gehäuse (703) umfasst, das Öl enthält, das die Schmierung eines Kolbens (706) von einer unteren Totpunktposition zu einer Verdichtungsposition bereitstellt, wobei der Zweitaktmotor (700) Dichtmittel aufweist, die zu jeder Zeit und unter allen Umständen das Öl im unteren Kurbelgehäuse (703) einschließen, wobei das obere Gehäuse (702) einerseits eine Einlassöffnung (712) aufweist, die die Einführung eines gasförmigen Kraftstoffs auf der Basis von Diwasserstoff und Disauerstoff ermöglicht, und andererseits eine Auslassöffnung (714), die, indem sie das Öl im unteren Kurbelgehäuse (703) hält, nur Wasserdampf, der mit nicht verbrauchtem gasförmigem Kraftstoff beladen ist, freisetzt, wobei das Motorsystem eine mit der Auslassöffnung (714) verbundene Rückführvorrichtung (72) umfasst, wobei die Abgasrückführvorrichtung (72) ermöglicht, den nicht verbrauchten gasförmigen Kraftstoff zurückzugewinnen und ihn wieder in die Einlassöffnung (712) einzuspritzen.

2. Motorsystem nach Anspruch 1, **dadurch gekennzeichnet, dass** die Rückführvorrichtung (72) einen Wärmetauscher aufweist, der den Wasserdampf aus dem nicht verbrauchten Gasgemisch durch Kondensation abscheidet.

3. Motorsystem nach einem der Ansprüche 1 und 2, **dadurch gekennzeichnet, dass** die Dichtmittel ein im oberen Teil des Kolbens (706) ausgebildetes Dichtelement (710) aufweisen.

4. Motorsystem nach einem der vorherigen Ansprüche 1 bis 3, **dadurch gekennzeichnet, dass** die Dichtmittel zwei Dichtelemente (710a, 710b) aufweisen, die es ermöglichen, die Auslassöffnung (714) bzw. die Einlassöffnung (712) zu verschließen.

5. Motorsystem nach Anspruch 4, **dadurch gekennzeichnet, dass** die Dichtelemente (710a, 710b) seitlich am Kolben (706) angebracht sind und sich in Längsrichtung beiderseits des Kolbens (706) erstrecken.

6. Motorsystem nach einem der vorherigen Ansprüche 1 bis 5, **dadurch gekennzeichnet, dass** es einen Mischer (61) aufweist, der stromaufwärts der Einlassöffnung (712) angeordnet ist, wobei der Mischer (61) ermöglicht, den Diwasserstoff und den Disauerstoff, die beide unter Druck stehen, zu mischen, um den gasförmigen Kraftstoff zu erzeugen, der zur Verbrennung durch Thermokatalyse geeignet ist.

7. Motorsystem nach Anspruch 6, **dadurch gekennzeichnet, dass** der Mischer (61) auch eine Druckluftzuführung umfasst, um den Disauerstoff und den Diwasserstoff mit der Druckluft zu mischen und die Konzentration von Disauerstoff und Diwasserstoff im gasförmigen Kraftstoff zu variieren.

8. Motorsystem nach Anspruch 7, **dadurch gekennzeichnet, dass** der Mischer (61) mit der Einlassöffnung (712) über einen Einlasskanal (70) verbunden ist.

9. Motorsystem nach einem der vorherigen Ansprüche 6 bis 8, **dadurch gekennzeichnet, dass** der am Ausgang der Rückführvorrichtung (72) nicht verbrauchte gasförmige Kraftstoff über einen Rückgewinnungskanal (74) am Mischer (61) wieder eingespritzt wird.

10. Motorsystem nach einem der vorherigen Ansprüche 1 bis 9, **dadurch gekennzeichnet, dass** innerhalb des oberen Gehäuses (702) die Auslassöffnung (714) oberhalb der Einlassöffnung (712) positioniert ist.

11. Motorsystem nach einem der vorherigen Ansprüche 1 bis 10, **dadurch gekennzeichnet, dass** die Dichtmittel im unteren Gehäuse (703) ein Expansionssystem (709) umfassen, das dazu beiträgt, das Öl zu jeder Zeit und unter allen Umständen im unteren Gehäuse (703) zu halten.

## Claims

1. Engine system for dihydrogen fuel, the system comprising a two-stroke internal combustion engine (700) which comprises an engine crankcase (701) having an upper case (702) and a lower case (703) which contains oil for lubricating a piston (706) from a bottom dead center position to a compression position, the two-stroke engine (700) comprising sealing means which, at all times and in all circumstances, confine the oil in the lower case (703), wherein the upper case (702) comprises an intake port (712) for introducing a gaseous fuel based on dihydrogen and dioxygen and an exhaust port (714) which, by keeping the oil in the lower case (703), only discharges water vapor loaded with unconsumed gaseous fuel, the engine system comprising a recirculation device (72) connected to the exhaust port (714), the device (72) for recirculating the exhaust gases making it possible to recover the unconsumed gaseous fuel and reinject it at the intake port (712).

2. Engine system according to claim 1, **characterized in that** the recirculation device (72) comprises a heat exchanger which separates the water vapor from the unconsumed gas mixture by condensation.

3. Engine system according to either claim 1 or claim 2, **characterized in that** the sealing means comprise a sealing member (710) provided in the upper part of the piston (706).

4. Engine system according to any of claims 1 to 3, **characterized in that** the sealing means comprise two sealing elements (710a, 710b) for obstructing the exhaust port (714) and the intake port (712), respectively.

5. Engine system according to claim 4, **characterized in that** the sealing elements (710a, 710b) are mounted laterally on the piston (706) and extend longitudinally on either side of the piston (706).

6. Engine system according to any of claims 1 to 5, **characterized in that** it comprises a mixer (61) arranged upstream of the intake port (712), the mixer (61) making it possible to mix the dihydrogen and the dioxygen, both pressurized, in order to create the gaseous fuel suitable for combustion by thermo-catalysis.

7. Engine system according to claim 6, **characterized in that** the mixer (61) also comprises a compressed air inlet in order to mix the dioxygen and the dihydrogen with compressed air and to vary the concentration of dioxygen and dihydrogen in the gaseous fuel.

8. Engine system according to claim 7, **characterized in that** the mixer (61) is connected to the intake port (712) via an intake duct (70).

9. Engine system according to any of claims 6 to 8, **characterized in that** the unconsumed gaseous fuel at the outlet of the recirculation device (72) is reinjected via a recovery duct (74) on the mixer (61).

10. Engine system according to any of claims 1 to 9, **characterized in that**, within the upper case (702), the exhaust port (714) is positioned higher than the intake port (712).

11. Engine system according to any of claims 1 to 10, **characterized in that** the sealing means comprise, in the lower case (703), an expansion system (709) which helps to keep the oil in the lower housing (703) at all times and in all circumstances.

Fig. 1

Fig. 2

**Fig. 3**

**Fig. 4**

**Fig. 5**

**Fig. 6**

Fig. 7

Fig. 8

Fig. 9

Fig. 10

Fig. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 1750201 A
- GB 2249585 A